# EUROPEAN PATENT APPLICATION

(11) **EP 3 211 273 A1**
(43) Date of publication of application: **30.08.2017**
(21) Application number: 16157257.3
(22) Date of filing: 25.02.2016
(51) Int. Cl.: F16H 59/02, F16H 59/04, F16H 61/36

(54) **PULL-PULL SHIFTER ASSEMBLY**

(71) Applicant: Kongsberg Automotive AB, 565 33 Mullsjö (SE)
(72) Inventor: Hansson, Bill, 56434 Mullsjö (SE)
(74) Representative: Uexküll & Stolberg

(57) **Abstract**

The invention is directed to a pull-pull shifter assembly comprising: a shift lever (2) mounted in a base structure (10) to be pivotable in a select direction in a shift direction, select and shift directions being perpendicular to each other; a shift pulley (40) coupled to the shift lever (2) so that movements of the shift lever in shift direction are transferred to corresponding rotations of the shift pulley, two shift cable portions (42) being fixed to the shift pulley (40) to cause a pulling force on a respective one of the shift cable portions; a select pulley (50) coupled to the shift lever (2) so that movements of the shift lever in select direction are transferred to corresponding rotations of the select pulley (50), two select cable portions (52) being fixed to the select pulley to cause a pulling force on a respective one of the select cable portions; characterized in that the shift lever (2) is mounted in the base structure by a universal joint comprising a crosspiece (30) with two perpendicular trunnions (32, 34), each extending with opposite ends into bearings (6, 20), one of the trunnions (32) being rotatably mounted in opposite bearings (20) fixed in the base structure, the other of the trunnions (34) being rotatably mounted in opposite bearings (6) at a lower end portion (4) of the shift lever (2), and in that one of the shift and select pulleys is connected to the trunnion (32) mounted in the opposite bearings (20) of the base structure so that said one of the shift and select pulleys is rotated when the shift lever (2) is pivoted about the rotational axis of the trunnion (32) mounted in the opposite bearings (20) of the base structure.

## Description

The present invention relates to a pull-pull shifter assembly comprising:
a shift lever mounted in a housing to be pivotable in a select direction between at least two shift gate positions and, in each shift gate position, from a neutral position in a shift direction, select and shift directions being perpendicular to each other,
a shift pulley coupled to the shift lever so that movements of the shift lever in shift direction are transferred to corresponding rotations of the shift pulley, two shift cable portions being fixed to the shift pulley so that rotation of the shift pulley in a first direction causes a pulling force on one of the shift cable portions and that rotation in a second direction opposite to the first direction causes a pulling force on the other of the two shift cable portions,
a select pulley coupled to the shift lever so that movements of the shift lever in select direction are transferred to corresponding rotations of the select pulley, two select cable portions being fixed to the select pulley so that rotation of the select pulley in a first direction causes a pulling force on one of the select cable portions and that rotation in a second direction opposite to the first direction causes a pulling force on the other of the two select cable portions.

A traditional shifter assembly for a manual transmission of a vehicle typically comprises a shift lever which is displaceable in a shift direction (forwards and backwards from a rest position, the shift direction normally being parallel to the longitudinal direction and driving direction of the vehicle), and which is displaceable in a select direction between two or more shift gate positions (the select direction being to the left and right, perpendicular to the longitudinal direction and driving direction of the vehicle).

In a traditional push-pull cable the movements of the shift lever and the cable transferring the control commands of the shift lever to a shift shaft of a gearbox the resulting movements are as follows:
movement of the shift lever forward results in pulling the shift cable;
movement of the shift lever backwards results in pushing the shift cable;
movement of the shift lever to the left results in pulling the select cable; and
movement of the shift lever to the right results in pushing the select cable.

The cables are in turn connected to a shift tower which translates the movement of the cables into a rotation of a shift shaft around its longitudinal axis (corresponding to a shift movement of the shift shaft) and into a longitudinal displacement of the shift shaft along its longitudinal axis (corresponding to a select movement of the shift shaft). The shift shaft is in turn selectively engageable with shift forks which engages/disengages the various gears of the transmission.

A problem associated with such traditional shifter assemblies is that the cables must be capable of transferring a pushing force. This implies high requirements on the structural rigidity of the cables. A cable, more particularly the inner cable element which is enveloped by a cable sleeve, has to be rather stiff such that it does not bend when pushing forces are transferred through the inner cable element.

It is also known in the field to utilize so called pull-pull shifter assemblies, i.e. a shifter assembly that actuates the shift tower solely by pulling cables. This requires two cable portions for each of the select and the shift directions (the two cable portions needed for each direction can in fact belong to one cable which is routed around a pulley and connected thereto such that rotational movement of the pulley in forward and backward directions result in a pulling action of one of the two cable portions, respectively; alternatively two separate cable portions individually connected to the respective pulley can be used). However, due to the lower requirements on the structural rigidity, the cables needed in a pull-pull shifter assembly will still be cheaper than cables needed in traditional push-pull shifter assemblies.

U.S. 2012/118,094 A1 discloses a pull-pull shifter assembly according to the preamble of claim 1. The shifter assembly has a shift lever which is mounted to be pivotable in a select direction between at least two shift gate positions and, at each shift gate position, from a neutral position in a shift direction perpendicular to the select direction. The shift lever is directly and fixedly connected to a shift pulley so that moving the shift lever forward or backward in shift direction directly rotates the shift pulley to make a corresponding rotational movement in forward or backward direction. A shift cable is routed around and fixed to the shift pulley to transmit rotational movements thereof to corresponding displacements of the shift cable. There is furthermore a select pulley with a corresponding select cable to transmit rotations of the select pulley into corresponding displacements of the select cable. The shift lever comprises a select arm projecting at a right angle therefrom and extending into an elongated slot formed in the select pulley such that upward and downward pivotal movement of the select arm caused by tilting of the shift lever in the left or right direction is transferred to corresponding rotational movements of the select pulley. This arrangement requires that the shift pulley is following the tilting movement of the shift lever if the latter performs a select movement. Therefore, the rotational axis of the shift pulley can not be stationary within the housing but has to accommodate the tilting select movements of the shift lever which requires a complicated bearing structure. Furthermore, there is a risk that the shift cable which is guided around the circumference of the shift pulley in a circumferential groove thereof becomes dislodged from the shift pulley when the latter is performing a tilting movement with the shift lever. Such removal of the shift cable assembly from the shift pulley would render the shifter assembly inoperative.

A pull-pull shifter assembly comprising the features of the preamble of claim 1 is disclosed in WO 2015/090370 A1. The shift lever is mounted in a base structure by a ball portion provided on the shift lever which is received in a complementary socket portion fixed in the base structure to mount the shift lever to be pivotal in shift and select directions. A shift pulley is provided and connected to two shift cable portions extending from the shift pulley. The two shift cable portions may in fact be parts of one physical shift cable which is routed around the shift pulley and connected thereto to present two opposite cable end portions extending from the shift pulley to a shift tower. In the same manner two select cable portions are connected to a select pulley. Shift pulley and select pulley are arranged parallel to each other in the base structure at a level vertically below the lower end of the shift lever. Shift and select pulleys are disposed on top of each other and such that their axes of rotation are extending generally in vertical direction. The shift lever comprises shift and select fingers extending in vertical direction therefrom which are received in a shift lever and a select lever, respectively. Shift and select levers are pivotably mounted in the base structure. A lower end portion of the shift lever is received in a recess in the shift pulley, and a lower end portion of the select arm is received in a recess in the select pulley such that pivoting of the respective arm causes a rotational movement of the respective pulley.

Although the pull-pull shifter design disclosed in WO 2015/090370 A1 allows a compact and space-saving design of the shifter assembly, in particular by arranging the shift and select pulleys on top of each other in an essentially horizontal orientation below the lower end of the shift lever in the base structure, it requires separate shift and select levers which are pivotally mounted in the base structure and which cooperate with shift and select fingers which extend from the shift lever. These shift and select levers, their pivotal mounting in the base structure and their design with lower extensions extending into respective recesses of the shift and select pulleys require several separate components and bearings so that the overall assembly has a certain degree of complexity and requires many assembly steps in the production process.

It is an object of the present invention to provide a pull-pull shifter assembly which has a simple and stable design and which is easy to assemble. In addition a stable and reliable operation of the pull-pull shifter assembly should be ensured.

This object is achieved by a pull-pull shifter assembly comprising the features of claim 1. Preferred embodiments of the invention are set out in the dependent claims.

According to the present invention the shift lever is mounted in base structure by a universal joint comprising a crosspiece (often also referred to as spider) with two perpendicular trunnions. Each trunnion extends with opposite ends into bearings, wherein one of the trunnions is rotatable mounted in bearings fixed in the base structure, and the other of the trunnions is rotatable mounted in opposite bearings formed at a lower end portion of the shift lever.

According to the invention one of the shift and select pulleys is connected to the trunnion mounted in the bearings of the base structure so that said one of the shift and select pulleys is rotating with the connected trunnion when the shift lever is pivoted about the rotational axis of the trunnion mounted in bearings of the base structure. Due to the connection of one of the shift and select pulley with the trunnion mounted in the base structure this connected pulley is rotated by pivotal movements of the shift lever without need of any linkage and lever arms for driving rotation of the pulley which is directly connected to this trunnion so that it follows its rotational movements. The direct connection with one of the shift and select pulleys with the trunnion about which the shift lever pivots in one of the shift and select directions provides for a simple and reliable design of the shifter assembly.

In a preferred embodiment the other one of the shift and select pulleys is rotatable mounted in the base structure below the lower end portion of the shift lever and with its axis of rotation extending vertically. This other one of the shift and select pulleys is coupled to the lower end portion of the shift lever by a coupling including a drive pin received in an elongated groove such that pivotal movements of the shift lever about the trunnion mounted in the fork portion of the shift lever are translated into rotational movements of the other one of the shift and select pulleys through the drive pin/elongated groove coupling. A drive pin extending from one of the lower end portion of the shift lever and the other one of the shift and select pulleys and a receiving elongated slot on the other one of the components mentioned provides for a simple drive coupling between the components mentioned in a direction perpendicular to the direction of elongation of the elongated groove. On the other hand movement of the components in the direction of elongation of the elongated groove are permitted without causing any movement of the pulley connected to the shift lever by this drive pin/groove coupling since the drive pin can slide along the elongated groove.

In a preferred embodiment the drive pin is connected to the lower end portion of the shift lever and extends towards the other one of the shift and select pulleys and into the elongated groove which is provided on the other one of the shift and select pulleys and which extends in radial direction thereof.

In a preferred embodiment the opposite bearings of the base structure are formed in a fork fixed in the base structure, and the opposite bearings at the lower end portion of the shift lever are formed in a fork formed at the lower end portion of the shift lever. Insofar reference is made here to a fork, this term is intended to mean a structure including two opposite leg portions in which bearings are formed or which carry opposite bearings which receive the opposite ends of one of the trunnions.

In a preferred embodiment the fork at the lower end portion of the shift lever is part of an annular end portion of the shift lever, in which annular end portion opposing bearings for one trunnion of the crosspiece of the universal joint are provided at diametrically opposite locations of the annular end portion, whereas the second trunnion of the crosspiece extends perpendicular to a plane of the annular portion in opposite directions into the bearings of the fork of the base structure. The annular end portion on the shift lever can be formed as circular ring, with the two bearing for one of the trunnions being disposed diametrically opposite to each other on the annular end portion of the shift lever.

In a preferred embodiment the pulley connected to the trunnion mounted in the bearings of the base structure is the select pulley. Shifter assemblies are usually arranged such that select movements of the shift lever are performed by pivoting the shift lever forward and backward in longitudinal direction of the vehicle (driving direction). In this case the fork of the base structure may be arranged such that the bearings are located opposite to each other in lateral direction of the vehicle. In this case the trunnion received by the bearings of of the base structure provides for the pivoting axis of the shift lever for shift movements. The second trunnion of the crosspiece extends perpendicular to the first trunnion and therefore extends in longitudinal direction of the vehicle. The trunnion mounted in the bearings of the base structure may be disposed horizontally, whereas the trunnion mounted in the bearings at the lower end portion of the shift lever extends generally in horizontal direction but is pivoting with respect to a horizontal plane when the shift lever is pivoted about the trunnion mounted in the bearings of the base structure.

In a preferred embodiment the elongated groove provided on the other one of the shift and select pulleys is formed by two parallel walls which extend upright from the pulley face and define the elongated groove therebetween.

In a preferred embodiment the fork of the base structure is connected to and extends with two opposite fork legs from a base plate of the base structure, each fork leg being provided with a bearing of the base structure. The base plate is provided with an axle projecting from the base plate between the fork legs, said axle being received in a central recess of the other one of the shift and select pulleys for rotatable mounting it on the base plate of the base structure.

The invention will now be described with reference to an exemplary embodiment shown in the drawings in which:
Fig. 1 shows a perspective view of the main components of a pull-pull shifter assembly;
Fig. 2 shows an exploded view of the embodiment shown in Fig. 1;
Figs. 3a) to c) show side views of the embodiment shown in Figs. 1 and 2 showing a sequence of shift movements of the shift lever;
Figs. 4 and 5 each show a perspective view and a top view of the embodiment shown in Figs. 1 to 3 for a first and second select movement state of the shift lever, respectively.

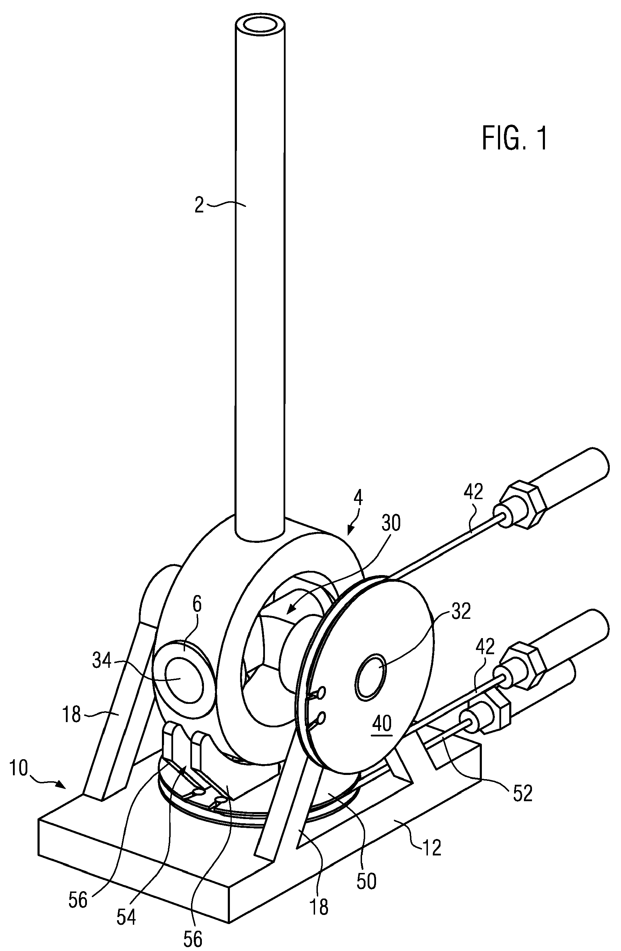

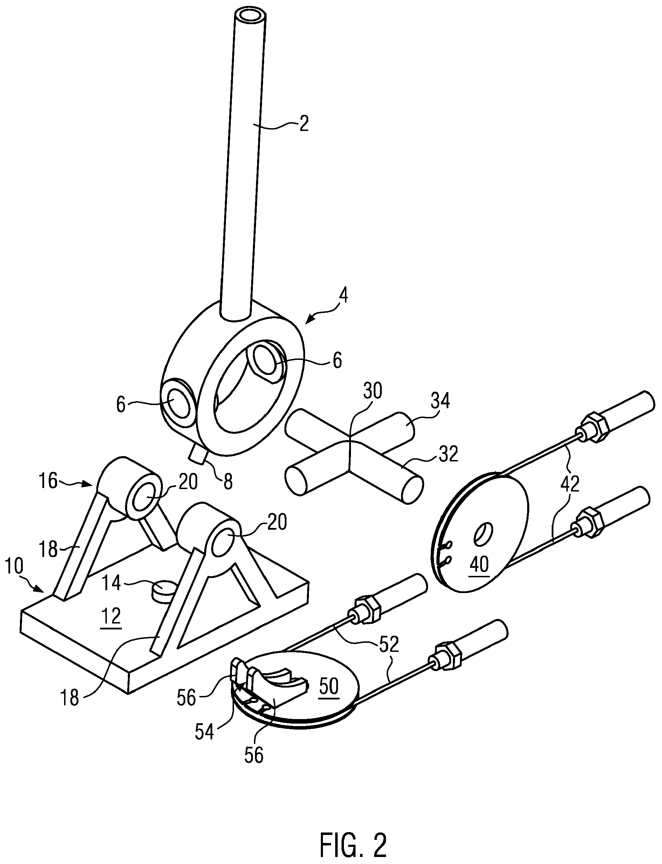

The pull-pull shifter assembly of the exemplary embodiment will now first be described with reference to Figs. 1 and 2 to describe the components of the assembly and their relationship to each other.

The shifter assembly comprises a base structure 10 to be mounted in a vehicle such that a shift lever 2 of the shift lever extends into the vehicle cabin in a area next to the driver seat. The base structure 10 includes a base plate 12 and a fork 16 extending upright from the base plate 12. The fork 16 comprises two opposite fork legs 18 which carry bearings 20 at their upper ends.

The base plate 12 is provided with a central axle 14 which projects from the base plate 12 in the center between the fork legs 18 (see Fig. 2). The central axle 14 is received in a complementary central recess in a lower surface of a select pulley 50. In this manner select pulley 50 is rotatably mounted on the base plate 12, wherein the select pulley 50 is disposed horizontally and has an axis of rotation extending vertically from the base plate 12.

From the select pulley 50 two select cable portions 52 extend. These select cable portions 52 may be part of one physical cable which is routed around select pulley 50, or can be two separate cables which are each guided around part of the periphery of select pulley 50 and which are each provided with a pin at the end which is received in a recess formed close to the periphery of the select pulley to fix each of the cable portions 52.

The upper surface of the select pulley 50 is provided with two opposite walls 56 which extend upright from the upper surface of the select pulley 50 and which form an elongated slot or groove 54 in between.

The shift lever 2 has a lower end portion 4 which carries two opposite bearings 6. The lower end portion 4 has in this embodiment an annular configuration and carries at a lower part thereof a drive pin 8 (see Fig. 2) which extends towards the select pulley 50 underneath the lower end portion 4 of the shift lever 2.

The shift lever 2 is mounted in the base structure 10 by a universal joint. This universal joint comprises a crosspiece (sometimes also referred to as spider) having two perpendicular trunnions 32 and 34 which extend with opposite ends therefrom. The opposite end portions of trunnion 34 are received in the two opposite bearings 6 in the lower end portion 4 of the shift lever 2. The opposite ends of the trunnion 34 are mounted in the opposite bearings 6 such the trunnion 34 is rotatable relative to the opposite bearings 6. In this lower end portion 4 and the shift lever 2 connected thereto may pivot about the longitudinal axis of trunnion 34.

The other trunnion 32 is mounted with its opposite ends in the opposite bearings 20 provided at the upper ends of fork legs 18 of the fork 16 connected to base plate 12. Trunnion 32 is rotatably mounted in bearings 20 such that the crosspiece 30 and the lower end portion 4 connected to the crosspiece 30 by trunnion 34 may pivot about the longitudinal axis of trunnion 32.

Shift pulley 40 has a central aperture in which an end portion of trunnion 32 extending from one of the bearings 20 id received. The shift pulley 40 is fixed to the end portion of trunnion 32 such that shift pulley 40 cannot rotate with respect to trunnion 32.

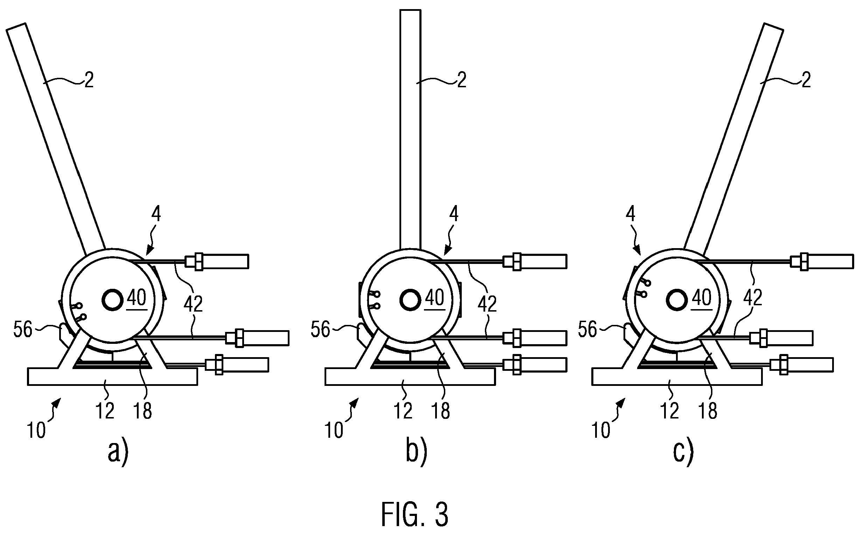

In the following we will describe the function of universal joint of the pull-pull shifter assembly first referring to shift movements with reference to Figs. 3a) to c). Fig. 3b) shows the shift lever extending vertically in its neutral position. As described above trunnion 32 of crosspiece 30 is rotatably received in the bearings 20 of the fork legs 18 of the base structure such that crosspiece 30 may pivot about the longitudinal axis of trunnion 32. In this manner also the shift lever 2 may pivot about the longitudinal axis of trunnion 32 to perform shift movements in forward or rearward directions from the neutral position. The lower end portion 4 of shift lever 2 is coupled to the crosspiece 30 by trunnion 34 received in the bearings 6 of the lower end portion 4 of the shift lever such that shift lever 2 follows pivotal movements of crosspiece 30 about the longitudinal axis of trunnion 32. Pivotal movements of crosspiece 30 about the longitudinal axis of trunnion 32 cause corresponding rotational movements of shift pulley 40 which is fixedly connected to trunnion 32. In Fig. 3a) shift lever 2 has been pivoted forward in shift direction compared to the neutral position of Fig. 3b). As described this shift movement of shift lever 2 is transferred to crosspiece 30 since trunnion 34 is mounted in the opposite bearings 6 of the lower end portion 4 of the shift lever 2. The rotational forward movement of trunnion 32 is transmitted to shift pulley 40 which therefore performs a corresponding rotational movement. This rotational movement of shift pulley 40, in anti-clockwise sense in the movement from Fig. 3 b) to Fig. 3a), causes the upper shift cable portion of the two shift cable portions 42 to be pulled with towards the base structure.

Fig. 3c) shows the result of a shift movement of shift lever 2 in opposite, rearward direction. Again the pivotal movement of shift lever 2 is transferred via trunnion 34 received in opposite bearings 6 of the lower end portion 4 of the shift lever to trunnion 32 of crosspiece 30. The rotational movement of trunnion 32 is transferred to a corresponding rotational movement of shift pulley 40 which is fixedly connected to trunnion 32. In the case rotation of shift pulley 40 in clockwise sense in the movement from Fig. 3b) to Fig. 3c) has the result that the lower shift cable portion of the two shift cable portions 42 is pulled closer to the base structure 10.

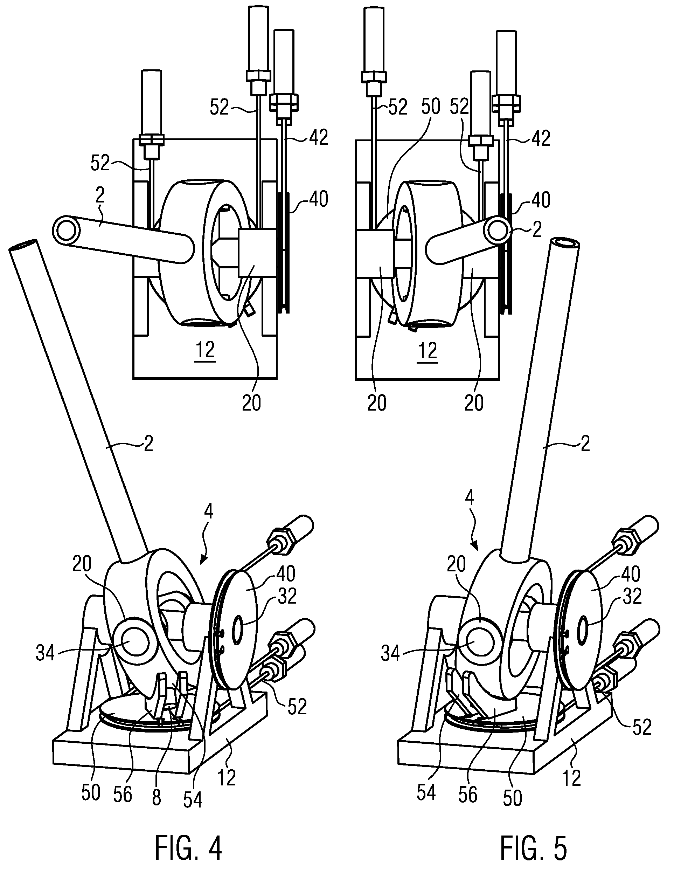

Now select movements of shift lever 2 and the function of universal joint of the pull-pull shifter will be described with reference to Fig. 1, 4 and 5. Fig. 1 shows shift lever 1 in its neutral position extending vertically upward from base plate 12. The universal joint allows shift lever 2 to pivot in select direction which is a direction perpendicular to the Figure plane of Figs. 3a) to c). As stated before, Fig. 1 shows shift lever 2 in its neutral position. Fig. 4 shows shift lever 2 pivoted in select direction (towards the left hand side in the lower part of Fig. 4). When shift lever 2 is pivoted in select direction the lower end portion 4 is pivoted by rotating with its bearings 6 around the longitudinal axis of trunnion 34 of crosspiece 30. Such movement does not affect trunnion 32, and therefore causes no movement of shift pulley 40. When the lower end portion 4 pivots due to a select pivotal movement of shift lever 2 the driving pin 8 is rotated around the longitudinal axis of trunnion 34. Such rotational movement of drive pin 8 is accompanied by a translational movement component. In this manner drive pin 8 which is received in the elongated slot 54 between opposite parallel walls 56 is able to exert a torque on select pulley 50 which in this manner is driven to rotate about the rotational axis of central axle 14. As can be seen in the lower part of Fig. 4 the pivotal movement of the shift lever 2 to the left hand side is accompanied by a rotational movement of drive pin 8 to the right hand side in Fig. 4 which is transmitted to a rotational movement of shift pulley 50 in anti-clockwise direction. This rotational movement of shift pulley 50 causes a pulling force on the left select cable portion 52 in the upper part of Fig. 4.

Fig. 5 illustrates the result of a pivotal select movement of shift lever 2 in the opposite direction (to the right hand side in the lower part of Fig. 5). The accompanying rotation of the lower end portion 4 of shift lever 2 around the longitudinal axis of trunnion 34 is accompanied by a rotational movement of drive pin 8 around the longitudinal axis of trunnion 34 which is accompanied by a shifting movement of drive pin 8 to the left hand side of Fig. 5. This select pivotal movement of shift lever 2 therefore is transmitted via drive pin 8 received in elongated groove 54 to a rotational movement of select pulley 50 in clockwise direction. Such rotational movement of select pulley 50 in clockwise direction causes a pulling force on the shift cable portion 52 on the right hand side in the upper part of Fig. 4 which therefore causes the right one of the two select cable portions 52 to be pulled closer to the base structure 10.

## Claims

1. Pull-pull shifter assembly comprising:
a shift lever (2) mounted in a base structure (10) to be pivotable in a select direction between at least two shift gate positions and, in each shift gate position, from a neutral position in a shift direction, select and shift directions being perpendicular to each other,
a shift pulley (40) coupled to the shift lever (2) so that movements of the shift lever in shift direction are transferred to corresponding rotations of the shift pulley, two shift cable portions (42) being fixed to the shift pulley (40) so that rotation of the shift pulley in a first direction causes a pulling force on one of the shift cable portions and that rotation in a second direction opposite to the first direction causes a pulling force on the other of the two shift cable portions (42),
a select pulley (50) coupled to the shift lever (2) so that movements of the shift lever in select direction are transferred to corresponding rotations of the select pulley (50), two select cable portions (52) being fixed to the select pulley so that rotation of the select pulley in a first direction causes a pulling force on one of the select cable portions and that rotation in a second direction opposite to the first direction causes a pulling force on the other of the two select cable portions (52),
**characterized in that**
the shift lever (2) is mounted in the base structure by a universal joint comprising a crosspiece (30) with two perpendicular trunnions (32, 34), each extending with opposite ends into bearings (6, 20), one of the trunnions (32) being rotatably mounted in opposite bearings (20) fixed in the base structure, the other of the trunnions (34) being rotatably mounted in opposite bearings (6) at a lower end portion (4) of the shift lever (2), and **in that** one of the shift and select pulleys is connected to the trunnion (32) mounted in the opposite bearings (20) of the base structure so that said one of the shift and select pulleys is rotated when the shift lever (2) is pivoted about the rotational axis of the trunnion (32) mounted in the opposite bearings (20) of the base structure.

2. Pull-pull shifter assembly according to claim 1, **characterized in that** the other one of the shift and select pulleys is rotatably mounted in the base structure(10) below the lower end portion (4) of the shift lever (2) and with its axis of rotation extending vertically, and is coupled to the lower end portion of the shift lever by a drive pin (8) received in an elongated groove (54) such that pivotal movements of the shift lever (2) about the trunnion (34) mounted in the opposite bearings (6) at the lower end portion (4) of the shift lever are translated into rotational movements of the other one (50) of the shift and select pulleys.

3. Pull-pull shifter assembly according to claim 2, **characterized in that** the drive pin 88) is connected to the lower end portion (4) of the shift lever (2) and extends towards the other one (50) of the shift and select pulleys and into the elongated groove (52) which is provided on the other one (50) of the shift and select pulleys and which extends in radial direction thereof.

4. Pull-pull shifter assembly according to any of the preceding claims, **characterized in that** the opposite bearings (20) of the base structure are formed in a fork (16) fixed in the base structure, and **in that** the opposite bearings (6) at the lower end portion of the shift lever are formed in a fork formed at the lower end portion (4) of the shift lever (2).

5. Pull-pull shifter assembly according to claim 4, **characterized in that** the fork at the lower end portion (4) of the shift lever is part of an annular end portion of the shift lever (2) in which opposing bearings (6) for one trunnion (34) of the crosspiece (30) of the universal joint are formed, whereas the second trunnion (32) of the crosspiece extends perpendicular to a plane of the annular portion in opposite directions into the bearings (20) of the fork (16) of the base structure.

6. Pull-pull shifter assembly according to any of the preceding claims, **characterized in that** the pulley connected to the trunnion (32) mounted in bearings (20) in the fork (18) of the base structure is the shift pulley (40).

7. Pull-pull shifter assembly according to any of claims 2 to 6, when dependent on claim 2 or 3, **characterized in that** the elongated groove (54) provided on the other one (50) of the shift and select pulleys is formed by two parallel walls (56) extending upright from the pulley face and defining the elongated groove (54) therebetween.

8. Pull-pull shifter assembly according to any of preceding claims 4 to 7, when dependent on claim 4, **characterized in that** the fork (16) of the base structure is connected to and extends with two opposite fork legs (18) from a base plate (12) of the base structure (10) which is provided with an axle (14) projecting from the base plate between the fork legs (18), said axle being received in a central recess of the other one (50) of the shift and select pulleys for rotatable mounting it on the base plate.
